**Europäisches Patentamt**

**European Patent Office**

**Office européen des brevets**

(19)

(11) Veröffentlichungsnummer: **0 065 176**
A2

(12) # EUROPÄISCHE PATENTANMELDUNG

(21) Anmeldenummer: **82103797.5**

(22) Anmeldetag: **04.05.82**

(51) Int. Cl.³: **G 01 G 3/14**, G 01 G 21/22, G 01 L 1/26

(30) Priorität: **14.05.81 US 263505**

(43) Veröffentlichungstag der Anmeldung: **24.11.82** Patentblatt **82/47**

(84) Benannte Vertragsstaaten: **AT BE CH DE FR GB IT LI NL SE**

(71) Anmelder: **HOTTINGER BALDWIN MESSTECHNIK GMBH, Im Tiefen See 45 Postfach 42 35, D-6100 Darmstadt (DE)**

(72) Erfinder: **Lockery, Harry E., 115 Moore Road, Sudbury Massachusetts 01776 (US)**
Erfinder: **Laimins, Eric, 47 Hill Side Terrace, Belmont Massachusetts 02178 (US)**

(74) Vertreter: **Brand, Fritz, Dipl.-Ing., Hottinger Baldwin Messtechnik GmbH Im Tiefen See 45 Postfach 42 35, D-6100 Darmstadt (DE)**

(54) **Einrichtung zum Aufbringen der Last auf balkenförmige Aufnehmer.**

(57) In einer Plattformwaage, bei der die balkenförmigen Dehnungsmeßstreifen-Aufnehmer-Elemente vorzugsweise als integraler Bestandteil einer Plattform ausgebildet sind, werden Einflüsse durch horizontal oder unter einem Winkel angreifende Kraftkomponenten auf die Ermittlung des Gewichtswertes verhindert, indem die vertikalen Kraftkomponenten, die die Last oder das Gewicht darstellen, auf die balkenförmigen Dehnungsmeßstreifen-Aufnehmer-Elemente durch wenigstens zwei zusammenwirkende kurvenförmige, vorzugsweise sphärische Flächen übertragen werden, von denen eine Oberfläche einen größeren Kurvenradius als die andere hat. Durch das Zusammenwirken mit biegsamen Elementen ist genügend große Bewegungsfreiheit in beliebiger horizontaler Richtung gewährleistet, so daß horizontal oder im Winkel angreifende Kraftkomponenten über horizontale Begrenzungselemente von den Aufnehmerelementen ferngehalten werden.

Bei Anwendungsfällen, bei denen unter Verhinderung der Einwirkung horizontaler Kraftkomponenten lediglich vertikale Kraftkomponenten zwischen einem oberen und einem im wesentlichen hierzu parallel verlaufenden unteren horizontalen Element übertragen werden sollen, ohne daß die vertikale Kraftkomponente gemessen wird, sind in der gleichen Weise zwischen den beiden horizontalen Elementen Elemente mit wenigstens zwei zusammenwirkenden kurvenförmigen Flächen, biegsamen Elementen und horizontalen Begrenzungselementen vorgesehen.

Einrichtung zum Aufbringen der Last auf balkenförmige Aufnehmer

Die Erfindung bezieht sich auf eine Einrichtung zum Aufbringen der Last auf balkenförmige Aufnehmer gemäß dem Oberbegriff des Patentanspruches 1 sowie auf eine Einrichtung zur Übertragung vertikaler Kraftkomponenten zwischen einem oberen und einem im wesentlichen hierzu parallel verlaufenden unteren horizontalen Element gemäß dem Oberbegriff des Patentanspruches 2.

Typische Beispiele derartiger Plattform-Waagen sind bekannt aus dem U.S. Patent 4,261,429. Die in solchen Plattform-Waagen verwendeten Biegestab-Aufnehmer sind vorzugsweise so ausgeführt, daß sie integrale Bestandteile der eigentlichen Plattform bilden. Zu diesem Zweck werden Schlitze in die Plattform gefräst, herausgearbeitet oder geschnitten, und zwar in der Weise, daß die Schlitze einen Balken bilden, an welchem Dehnungsmeßstreifen befestigt sind. Die Empfindlichkeit der balkenförmigen Aufnehmer wird durch Bohren von Löchern in die Plattform an jedem inneren Ende eines jeden Schlitzes und zwischen den Enden jedes Schlitzes abgeglichen. Das freie Ende jedes Balkens ist in der praktischen Anwendung mit einem Gummifuß versehen. Elemente zur Überlastbegrenzung sind derart angeordnet, daß die Auslenkung jedes Balkens auf einen vorbestimmten Wert begrenzt ist.

Auf der Plattform oder einem Zwischenglied aufgebrachte Lasten verursachen eine Auslenkung der als Aufnehmer wirkenden Balken, welche wiederum die axiale Länge der Balken reduziert. Die Verringerung der Länge wird aufgenommen von der Elastizität oder Nachgiebigkeit der Gummifüße. Da jedoch die Elastizität bzw. Nachgiebigkeit nur gering ist, kann die Einführung horizontaler Anteile der Last auf das

- 2 -

balkenförmige Fühlerelement nicht ganz vermieden werden. Außerdem wird die Plattform selbst in vertikaler Richtung ausgelenkt und verursacht eine weitere Verkürzung sowohl in Längs- als auch in Querrichtung. Dies verursacht zusätzliche horizontale Lastkomponenten an den als Aufnehmer wirkenden Balken. Das Gleiche gilt für die Verkürzung der Plattform in der Querrichtung. In diesem Zusammenhang gelten die Querrichtung und die Längsrichtung in der Ebene der Plattform als horizontal.

Die vorerwähnten Lastanteile sind unerwünscht, da sie Linearitätsfehler im Ausgangssignal der Waage verursachen und auch eine höhere Hysterese aufgrund der unzureichenden mechanischen Eigenschaften der Gummifüße bewirken. Weiterhin können das Kriechverhalten und der Entlastungsfehler im Nullsignal der Waage den unzureichenden mechanischen Eigenschaften der bislang verwendeten Gummifüße zugerechnet werden.

Zusätzlich zu den vorerwähnten unerwünschten Effekten, die von Längs- und Querauslenkung verursacht werden, können Querkräfte, die beim Betrieb der Waage auftreten, ähnliche Effekte hervorrufen. Falls z.B. zu einer Last, die bereits auf der Waage liegt, unbeabsichtigt eine Seitenkraft aufgebracht wird, könnte etwas Schlupf auftreten zwischen den Gummifüßen und der Standfläche, wodurch die obengenannten Effekte aus horizontalen Anteilen der Last verändert werden und dadurch das Ausgangssignal der Waage geändert wird. Weitere Änderungen des Ausgangssignals der Waage können dann auftreten, wenn die Last nicht exakt in vertikaler Richtung wirkt. Aus diesen Gründen ist die Genauigkeit dieser Waagen bisher auf ca. 0,05 % begrenzt.

Es ist das Ziel der Erfindung, folgendes entweder einzeln oder in Kombination zu erreichen:

Wesentliche Verminderung der Einleitung störender Lastanteile in den Balken in einer Plattform-Waage;

Verminderung der Werte von Nichtlinearität und Hysterese,
so daß sie nicht größer als o,o1 % bis o,o2 % werden;

Verminderung des Kriechfehlers auf Werte, wie sie mit den
Dehnungsmeßstreifen und den Materialien der Balken erreichbar sind, unabhängig und unbeeinflußt durch die Gummifüße;

zu vermeiden, daß zeitweilig aufgebrachte Horizontalkräfte
bei einer bereits belasteten Waage bleibende Fehler des Ausgangssignals verursachen, oder anders ausgedrückt, sicherzustellen, daß die Zwischenplatte einer Waage immer in die
ursprüngliche Lage zurückkehrt;

wirkungsvolle Beherrschung großer horizontaler Lastanteile
durch eine Begrenzung der relativen Bewegung zwischen den
beiden Platten oder Plattformen einer Plattform-Waage; und

wirkungsvolle mechanische Isolierung der Balken solcher Plattform-Waagen gegen irgendwelche störende Belastungen, die
herrühren können aus den verschiedenen Auslenkungen in der
Waage oder aus von außen wirkenden Lastanteilen, die in
horizontaler Richtung wirken.

Gemäß der Erfindung wird dies bei Einrichtungen gemäß dem
Oberbegriff der Ansprüche 1 oder 2 durch die kennzeichnenden Merkmale der Ansprüche 1 bzw. 2 erreicht.

Die Einrichtung gemäß der Erfindung überträgt vertikale
Kraftkomponenten zwischen einem oberen und einem unteren
horizontalen Element wie die zwei Platten oder Plattformen
einer Plattform-Waage, die     im wesentlichen parallel
zueinander verlaufen, während gleichzeitig die Übertragung im wesentlichen horizontaler Kraftkomponenten zwischen den beiden horizontalen Elementen, Platten bzw. Plattformen verhindert wird. Zu diesem Zweck wirken erste und zweite kurvenförmige Elemente bei der Übertragung vertikaler Kräfte zusammen und sind relativ zueinander in horizontaler Richtung beweglich, zum Isolieren oder Verhindern der Übertragung horizontaler Kraftanteile oder Auslenkungen. Die ersten Elemente mit kurvenförmiger Oberfläche besitzen einen gegebenen Kurvenradius und sind wirksam zwischen zwei horizontalen Elementen, Platten oder Plattformen angeordnet, so daß sie von einem der beiden horizontalen Elemente auf das andere weisen. Die zweiten Elemente mit kurvenförmiger Oberfläche haben einen kleineren Kurvenradius als die ersten Elemente. Die zweiten Elemente mit kurvenförmiger Oberfläche weisen den ersten entgegen, um ein Zusammenwirken der beiden Elemente mit kurvenförmiger Oberfläche zu erreichen. Rückhalteelemente, die auch elastische Elemente umfassen, sichern wirksam wenigstens eines der Elemente mit kurvenförmiger Oberfläche an dem entsprechenden horizontalen Element, wodurch die elastischen Elemente in Zusammenarbeit mit den Kurven verschiedener Radien die Übertragung horizontaler oder geneigter Kraftkomponenten von einem horizontalen Element auf das andere verhindern, jedoch die Übertragung vertikaler Kraftkomponenten zulassen. In einer Plattform-Waage kann eines der horizontalen Elemente eine Klammer oder ein Stab zur Kraftübertragung sein.

Anhand der Zeichnungen werden Ausführungsbeispiele der Erfindung beschrieben. Es zeigen in schematischer Darstellung:

Fig. 1      eine Seitenansicht - teilweise als Schnitt -
            einer Plattform-Waage, die mit der Einrichtung
            gemäß der Erfindung ausgestattet ist;

Fig. 1a    eine Draufsicht auf eine mit Dehnungsmeßstreifen versehene Ecke der unteren Plattform, die ausgeführt ist als stabförmiges Aufnehmerelement, wie es vorstehend als bekannter Stand der Technik beschrieben ist;

Fig. 2    eine Seitenansicht ähnlich Fig. 1 in verkleinertem Maßstab,mit  Sicht in Richtung des Pfeiles A in Fig. 1;

Fig. 3    einen Ausschnitt einer Seitenansicht ähnlich Fig. 1 in modifizierter Ausführung;

Fig. 4    einen Ausschnitt einer Seitenansicht einer weiteren Modifikation;

Fig. 5    eine Seitenansicht einer Ecke einer weiteren Ausführungsform einer Plattformwaage;

Fig. 6    eine Schnittansicht einer Ausführungsform zur Übertragung vertikaler Kraftkomponenten zwischen zwei horizontalen Elementen;

Fig. 7    eine Modifikation der Ausführungsform gemäß Fig. 5.

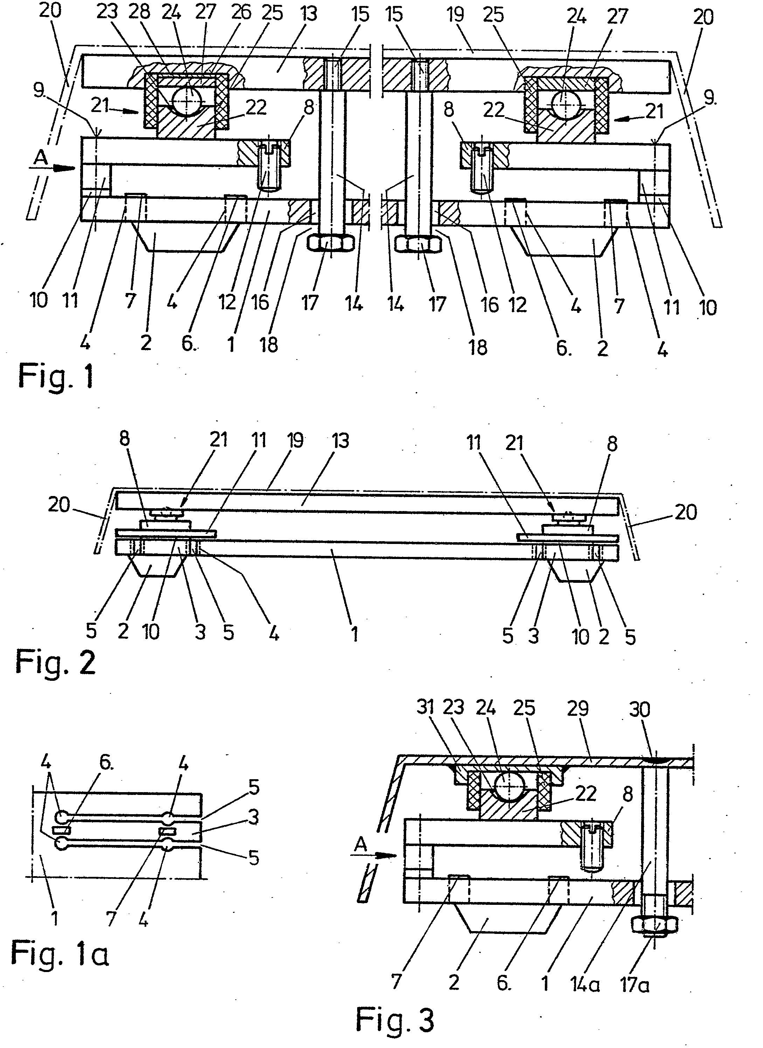

Fig. 1 zeigt eine erfindungsgemäß verbesserte Plattform-Waage mit einer Anordnung aus Kugel und Pfanne zur Kraftübertragung.  Die Plattform-Waage umfaßt eine erste Plattform 1, an welcher die Gummifüße 2 in üblicher Weise befestigt sind, jedoch an Stellen außerhalb des balkenförmigen Aufnehmerelementes 3 (in Fig. 1a). Die balkenförmigen Aufnehmerelemente sind gemäß dem Stand der Technik, gebildet, wie in Fig. 1a gezeigt, durch Bohren von Löchern 4 in die Platte oder Plattform 1 und durch Schneiden von Schlitzen 5 in die Plattform, wodurch letztere justiert wird. Danach werden Dehnungsmeßstreifen 6 und 7 in üblicher Weise an den Aufnehmerelementen befestigt, z.B. mit einem Kleber.

Ein Balken oder eine Klammer zur Kraftübertragung 8 ist am freien Ende eines jeden balkenförmigen Aufnehmerelementes 3 durch übliche Mittel 9 - lediglich gestrichelt angedeutet, wobei diese z.B. aus einem Gewindebolzen mit Mutter bestehen können, welcher durch ein Abstandsstück 1o und einen Überlastanschlag 11 hindurchreicht - befestigt. Ein weiterer einstellbarer Anschlag, wie z.B. eine Einstellschraube 12, ist in einem Gewindeloch am freien Ende des Kraftübertragungsbalkens 8 eingesetzt und kann gegen die aufwärts gerichtete Fläche der ersten Plattform 1 drücken.

Die Konstruktion ist an jeder Ecke der Waage gleich, weswegen nur eine Ecke beschrieben ist. Es werden jedoch die Dehnungsmeßstreifen 6 und 7 von jeder Ecke in üblicher Weise zu Brückenschaltungen verbunden.

Die Waage enthält eine zweite Plattform 13, an der die Last aufgebracht wird. Mehrere Abstandsbolzen 14 sind in Gewindelöcher 15 der zweiten Plattform 13 geschraubt. Die Abstandsbolzen gehen durch Löcher 16 in der ersten Plattform 1. Die Löcher 16 haben einen größeren Durchmesser als die Bolzen 14, wodurch eine horizontale Bewegung der zweiten Plattform 13 in Bezug auf die erste Plattform 1 in gewissem Maße erlaubt ist, z.B. um ca. 1,5 mm, was zur Verhinderung nachteiliger vertikaler Auslenkungen der Waage ausreichend ist. Unter der Einwirkung großer horizontaler Lasten wird die Bewegung der Bolzen 14 an den Kanten der Löcher 16 begrenzt, so daß die großen horizontalen Lasten um die Lasteinleitungs-Elemente herumgeleitet werden, die weiter unten noch beschrieben werden. Die Abstandsbolzen 14 haben Köpfe 17 mit geringem Abstand zu der abwärts gerichteten Fläche der ersten Plattform 1, wie bei 18 gezeigt. Dieser Abstand beträgt auch ca. 1,5 mm, ausreichend für eine vertikale Bewegung zwischen den Plattformen 1 und 13. Damit werden gleichzeitig die Plattformen in relativ definierter Lage gehalten, um ein Auseinandergehen der vertikalen Kraftübertragungs-Elemente zu verhindern.

Ein Schutzdeckel 19 mit seitlicher Schürze 2o - in Fig. 1 gestrichelt gezeichnet - kann die gesamte Plattformwaage umschließen, um das Eindringen von Staub o.Ä. in das Innere der Waage zu verhindern und die Funktion zu verbessern.

Die vetikalen Krafteinleitungselemente 21 umfassen gemäß der Erfindung in der Ausführung nach Fig. 1 eine gehärtete Stahlpfanne 22, die an dem Balken oder der Klammer 8 zur Kraftübertragung befestigt ist, etwa halbwegs zwischen den entsprechenden Dehnungsmeßstreifen 6 und 7.

Die Pfanne 22 hat eine Kalotte 23, die eine erste kurvenförmige Oberfläche mit gegebenem Radius bildet, welcher größer ist als der Kurvenradius einer zweiten kurvenförmigen Fläche, die durch die Stahlkugel 24 gebildet wird. Rückhalteelemente, gebildet aus einem biegsamen Stück Gummirohr 25, halten die Kugel in ihrer Lage. Zu diesem Zweck ist das biegsame Gummirohr 25 mit dem oberen Ende in einem flachen Sackloch 26 in der Unterseite der zweiten bzw. oberen Plattform 13 befestigt. Das Gummirohr 25 kann im Sackloch 26 mit Klebstoff befestigt sein. Das Rohr 25 kann anstatt aus Gummi auch aus anderem geeignetem Material bestehen. Die Plattform 13 drückt auf die Kugel 24 mittels einer gehärteten Stahlplatte 27 und, falls erforderlich, einem Ausgleichsblech 28. Die gehärtete Stahlplatte 27 und das Ausgleichsblech 28 sind z.B. auch angeklebt. Die Ausgleichsbleche 28 können auch dazu dienen, das saubere Aufliegen der Waageplattform 13 mit allen vier Ecken auf den jeweiligen Kugeln 24 sicherzustellen.

Wenn auch angemessene Bewegungsfreiheit in jeder horizontalen Richtung zwischen der zweiten Plattform 13 und der ersten Plattform 1 wünschenswert ist, so ist es doch gleichermaßen notwendig, solche relativen horizontalen Bewegungen zu begrenzen, um die obere Plattform bzw. das obere horizontale Element 13 in der richtigen Lage zu halten. Im erforderlichen Maße wird diese Begrenzung erzielt durch das biegsame Gummirohr 25, das um die Pfanne 22 herum liegt, wodurch gleichzeitig auch die Kugel 24 daran gehindert wird, aus der Kalotte 23 zu entweichen. Auf diese Art begrenzt das Gummirohr 25 kleine horizontale Lasten, während die Abstandsbolzen 14 größere horizontale Lasten begrenzen, sobald die Abstandsbolzen gegen die Wand der entsprechenden Bohrungen 16 stoßen.

In Fig. 2 werden dieselben Bezugszeichen wie in Fig. 1 benutzt; insoweit ist eine weitere, detaillierte Beschreibung der Fig. 2 nicht erforderlich. Im Betrieb bewirkt die vertikale Last, die vom Aufsetzen einer Last auf der Plattform 13 bzw. auf der Abdeckung 19 herrührt, eine zentrale Belastung der balkenförmigen Aufnehmerelemente 3 in jeder Ecke der Waage. Wegen der zentralen Belastungsanordnung werden die Aufnehmerelemente 3 in der zweifach bestimmten Art ausgelenkt, die der Auslenkcharakteristik eines Doppelbiegebalkens ähnlich ist. Die größte Auslenkung wird durch die vertikale Breite oder Dicke von Abstandsstücken 1o begrenzt, denn wenn der Balken soweit ausgelenkt wird, wie es der Dicke des Abstandsstücks entspricht, so wird der Überlast-Anschlag 11 auf der Oberfläche der ersten Plattform 1 aufsetzen. Jede Verkürzung oder Verringerung der Länge aufgrund des Aufbringens der Last auf den balkenförmigen Aufnehmerelementen 3 und Klammern 8, entweder in Längs- oder Querrichtung, wird von der in der Kalotte 23 und auf der Platte 27 rollenden Kugel 24 aufgenommen. Die Rollreibung ist sehr gering, da sowohl Kugel und Kalotte, als auch die Platte 27

aus gehärtetem Stahl hergestellt sind. Linearitätsfehler und Hysteresewerte sind bis ca. 0,01 % bis 0,02 % oder noch darunter reduziert worden. Der Kriechfehler ist auf Werte reduziert, wie sie mit Dehnungsmeßstreifen und Aufnehmer-Materialien erzielt werden können. Horizontale Lasten, die an der Waage zeitweilig angreifen, wenn ein Gewicht in wenig sorgfältiger Weise auf die Waagenplattform gesetzt wird, verursachen keine bleibenden Fehler, da die Zwischenplattform bzw. die zweite Plattform 13 jeweils wieder in die ursprüngliche Lage zurückkehrt, wegen des Zusammenwirkens der ersten und zweiten kurvenförmigen Fläche, die durch die Kalotte 23 und die Stahlkugel 24 dargestellt werden. Wird die Last wieder entfernt, rollt die Stahlkugel in der Kalotte zurück in ihre ursprüngliche Lage und bringt das Ausgangssignal der Waage auf ihren ursprünglichen Nullwert zurück.

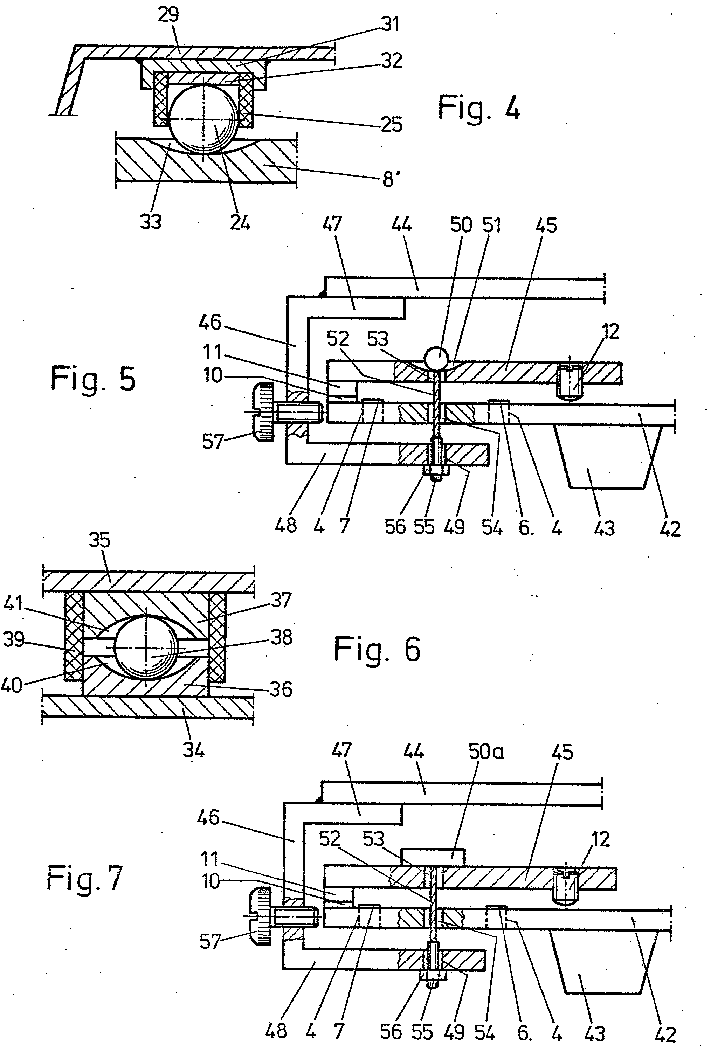

Fig. 3 zeigt eine Ausführung, in welcher die gesamte Struktur etwas vereinfacht ist, da der Deckel 29 gleichzeitig die zweite Plattform bildet. Wiederum werden große horizontale Lastkomponenten durch ein Element 14a begrenzt, das wie bei 30 gezeigt, an den Deckel 29 geschweißt sein kann. Eine Mutter 17a ist auf einem Gewindeteil am unteren Ende des Elementes 14 a geführt. Die Begrenzungselemente für die Stahlkugel 24 umfassen wieder die Pfanne 22 mit einer Kalotte 23 und ein biegsames Stück Gummirohr 25, welches in einer flachen Pfanne 31 gehalten wird. Letztere kann z.B. auf die nach unten weisende Fläche des Deckels 29 geschweißt werden. Das Element 31 vom Pfannentyp kann aus gehärtetem Stahl sein bzw. eine gehärtete Stahlplatte, wie bei 32 in Fig. 4 gezeigt, könnte in das Element 31 eingeschoben sein. Das obere Ende des biegsamen Gummirohrstückes 25 ist in die Pfanne 31 eingeklebt. Die Wirkungsweise der Ausführung gemäß Fig. 3 ist dieselbe wie oben beschrieben.

Die Ausführung nach Fig. 4 enthält den Balken 8' zur Kraftübertragung, der aus gehärtetem Stahl besteht und mit einer Kalotte 33 versehen ist, die die Kugel 24 aufnimmt, welche wiederum an ihrem Platz festgehalten wird durch das biegsame Stück Gummirohr 25 mit einem Innendurchmesser, der so passend dimensioniert ist, daß die Kugel richtig gehalten wird, aber doch deren geringfügige Bewegung in horizontaler Richtung ermöglicht. Das obere Ende des biegsamen Stücks Gummirohr 25 ist wiederum eingeklebt in die Pfanne 31, die am Deckel 29 angeschweißt ist. Falls eine gehärtete Stahlplatte 32 in die Pfanne eingesetzt wird, braucht letztere nicht aus gehärtetem Stahl zu sein.

Fig. 6 zeigt eine Ausführung, in welcher ein unteres horizontales Element 34 wie z.B. ein balkenförmiges Aufnehmerelement mit vertikalem Abstand zu einem oberen horizontalen Element 35 wie z.B. ein Deckel oder eine Plattform angeordnet ist. Erste Elemente mit kurvenförmiger Oberfläche sind vorhanden in Form zweier Kalotten 4o und 41 in ihren jeweiligen Pfannen 36 und 37 aus gehärtetem Stahl. Die zweite kurvenförmige Oberfläche besteht aus einer gehärteten Stahlkugel 38 im Eingriff mit den Kalotten 4o und 41. Ein biegsames Stück Gummirohr 39 ist an der oberen Plattform 35 festgeklebt und hält die Pfannen 36 und 37 in der Art, daß eine kleine Bewegung der Pfanne 36 in Bezug auf die Pfanne 37 in der oben beschriebenen Art möglich ist.

Der Effekt, daß horizontal wirksame, störende Lastkomponenten oder im Winkel wirkende, störende Lastkomponenten daran gehindert werden, das balkenförmige Aufnehmerelement zu beeinflussen, kann auch durch die modifizierte Ausführung wie in Fig. 5 gezeigt, erzielt werden. In Fig. 5 steht die untere Plattform 42 auf Gummifüßen 43 und ist mit den balkenförmigen Elementen versehen, die die "erste Plattform" bilden. Die Aufnehmerelemente tragen die Dehnungsmeßstreifen 6 und 7, wie schon beschrieben. Die obere Plattform 44 wird in ihrer Lage gehalten durch eine Klammer 46, die einen im wesentlichen U-förmigen Querschnitt hat, mit einem oberen Bein 47, das z.B. an der oberen Plattform 44 angeschweißt ist, und mit einem unteren Bein 48, das bis unter die Plattform 42 reicht.

Eine Last auf der Plattform 44 wird in die Aufnehmerelemente durch einen Balken 45 zur Kraftübertragung geleitet, welcher am freien Ende des Aufnehmerelementes mit Abstandsstück 1o und Überlastanschlag 11 wie beschrieben befestigt ist. Die Lasteinleitung wird bewirkt durch eine Kugel 5o, die nor- malerweise in einer Kalotte 51 im Balken 45 ruht, und einen biegsamen Draht 52, der an seinem oberen Ende an der Kugel 5o befestigt ist, und der durch ein Loch 53 im Balken 45, ein Loch 54 in der Plattform 42 und ein weiteres Loch 49 im unteren Bein 48 der Klammer 46 reicht. Das untere Ende des biegsamen Drahtes 52 trägt ein Gewindestück 55 mit einer Mutter 56. Der Durchmesser der Löcher 49, 53 und 54 ist groß genug, ein leichtes Schwingen des biegsamen Drahtes zu gestatten, welches durch relativ kleine horizontale oder geneigte Kraftkomponenten verursacht wird, so daß diese Kraftkomponenten daran gehindert werden, die Meßfunktion des Aufnehmerelementes zu beeinflussen. Die Einleitung größerer horizontaler Kraftkomponenten wird begrenzt durch die einstellbare Schraube 57 in der Klammer 46, die deshalb in gleicher Weise wie die Abstandsbolzen 14 wirkt. Die einstellbare Schraube 57 könnte als Stoßdämpfer wirken, der mit der Plattform 42 zum Eingriff kommt, falls die Plattform 44 horizontal in nicht erlaubtem Maße schwingen sollte.

In allen Ausführungen gibt es zwei vertikale Bauelemente, die zur Lastbegrenzung dienen. Eine Lastbegrenzung wird erzielt durch den oben erwähnten Überlastanschlag 11. Die andere wird durch die Überlasteinstellschraube 12 gebildet.

Der Anschlag 11 wird wirksam, wenn die Last 1oo % der Waagen-Nennlast überschreitet. Der einstellbare Überlastanschlag 18 wird im wesentlichen im gleichen Zeitpunkt wirksam und die Überlast wird zur Auflagefläche durch die Gummifüße 2 oder 43 weitergeleitet. Der zweite Anschlag 18 ist von besonderem Vorteil für die Vermeidung von Stoßlasten, die die Waage schädlich beeinflussen könnten. Falls beide Anschläge benutzt werden, so kann man feststellen, daß z.B. eine Waage mit ca. 45 kg Nennlast durch das Fallenlassen eines ca. 16 kg Prüfgewichtes auf die Plattform getestet werden kann (Fallhöhe ca. 38 cm), ohne daß ein Nullpunktsfehler der Waage über o,1 % verursacht wird.

Es ist verständlich, daß die Ausführungen mit starker oberer Plattform 13, wie z.B. in Fig. 1 und 2 gezeigt, für Waagen größerer Nennlast verwendet werden, während der Gebrauch des Deckels als Plattform für die Aufbringung der Last, wie z.B. in Fig. 3 und 4 gezeigt, für Waagen kleinerer Nennlast verwendet wird.

In Bezug auf Fig. 5 sollte noch erwähnt werden, daß ein sauberes Ausrichten der oberen Plattform 44, falls erforderlich durch das Einstellen der Mutter 56 erreicht werden kann. Die Klammer 46 kann an der oberen Plattform angeschweißt sein. Die Art der Verbindung ist jedoch nicht wesentlich. Gleichermaßen ist die Erfindung nicht auf eine kurvenförmige Oberfläche in der gezeigten Form einer Kalotte beschränkt. Vielmehr ist jede beliebige Form der Verbindung, die das biegsame Kabel 52 in einer festen Lage hält, annehmbar.

Wie in Fig. 7 gezeigt, kann auch eine ebene Platte 5oa die Kugel 5o ersetzen, und das biegsame Kabel 52 wird an der Platte 5oa befestigt. Das Loch 53 wird so bemessen, daß das biegsame Kabel 52 im wesentlichen in fester Lage gehalten wird. In dieser Ausführung haben die zwei zusammenwirkenden Flächen einen Kurvenradius mit unendlicher Länge,
so daß die beiden kurvenförmigen Flächen im wesentlichen
flach sind, wie in Fig. 7 bei 45 und 5oa gezeigt.

Zusätzlich zu den o.g. Vorteilen in Bezug auf eine Verbesserung der Waagengenauigkeit ist zu erwähnen, daß die Erfindung auch zu Waagen relativ geringer Bauhöhe führt, die
obendrein die Anforderungen der Handelsklasse erfüllen, da
störende Lasten ausgeschlossen werden bzw. daran gehindert
werden, die stabförmigen Aufnehmerelemente zu beeinflussen.
Die störenden Lasten werden am Wirksamwerden gehindert entweder durch die Rollbewegung der beiden kurvenförmigen Flächen gegeneinander in Verbindung mit dem biegsamen Element
25 bzw. durch das biegsame Kabel 25.

Die erfindungsgemäße Einrichtung ist auch für Anwendungsfälle bestimmt, bei denen unter Verhinderung der Einwirkung
horizontaler Kraftkomponenten lediglich vertikale Kraftkomponenten zwischen einem oberen und einem im wesentlichen
hierzu parallel verlaufenden unteren horizontalen Element
übertragen werden sollen, ohne daß die vertikale Kraftkomponente gemessen wird.

0065176

Patentansprüche:

1. Einrichtung zum Aufbringen einer Last auf balkenförmige Aufnehmer in einer Plattformwaage, bei der balkenförmige Dehnungsmeßstreifen-Aufnehmer-Elemente derart angeordnet sind, daß sie mit einem ersten Plattformelement zusammenarbeiten, dadurch gekennzeichnet, daß zwischen dem ersten Plattformelement (1) und einem hierzu im wesentlichen parallel angeordneten zweiten Plattformelement (13) Elemente (8) zur Kraftübertragung auf die balkenförmigen Dehnungsmeßstreifen-Aufnehmer-Elemente (3) vorgesehen sind, auf die sich das die Last aufnehmende zweite Plattformelement (13) über erste Elemente (22) mit kurvenförmiger Oberfläche und mit diesen zusammenwirkende zweite Elemente (24) mit kurvenförmiger Oberfläche, deren Radius kleiner als der der ersten Elemente (22) ist, abstützt und daß jede Gruppe von ersten und zweiten Elementen (22, 24) mit kurvenförmiger Oberfläche mit einem biegsamen Element (25) zusammenwirkt, das relative Bewegungen zwischen den beiden Elementen (22, 24) auch in horizontaler Richtung zuläßt, so daß horizontal oder im Winkel zur Horizontalen wirkende Kraftkomponenten über horizontale Begrenzungselemente (14, 16; 57) von den Aufnehmerelementen (3) ferngehalten werden.

2. Einrichtung zur Übertragung vertikaler Kraftkomponenten zwischen einem oberen und einem im wesentlichen hierzu parallel verlaufenden unteren horizontalen Element, dadurch gekennzeichnet, daß zwischen dem oberen horizontalen Element und dem unteren horizontalen Element ein oder mehrere erste Elemente mit kurvenförmiger Oberfläche und ein oder mehrere zweite Elemente mit kurvenförmiger Oberfläche mit kleinerem Kurvenradius angeordnet sind, wobei die kurvenförmigen Oberflächen der beiden Elemente (Elementengruppen), zusammenwirken, und daß jede zusammenwirkende Einheit, bestehend aus einem ersten und einem zweiten Element mit kurvenförmiger Oberfläche, durch ein biegsames Element so gehalten oder geführt ist, daß die Übertragung horizontal oder im Winkel
zur Horizontalen wirkender Kraftkomponenten von einem
auf das andere horizontale Element verhindert wird.

3. Einrichtung gemäß Anspruch 1 oder 2, dadurch gekennzeichnet, daß die ersten Elemente mit kurvenförmiger Oberfläche (22) je eine aufwärts weisende Höhlung (23) haben,
   daß jeweils die zweiten Elemente mit kurvenförmiger Oberfläche, bestehend aus je einer Kugel (24), sich nach
   unten in die Höhlungen (23) erstrecken, und daß jeweils
   ein biegsames Element (25) eine Kugel (24) in einer
   Höhlung (23) hält, während es horizontale Bewegungen der
   Kugel (24) in der Höhlung (23) gestattet.

4. Einrichtung gemäß Anspruch 1 oder 2, dadurch gekennzeichnet, daß die ersten Elemente mit kurvenförmiger Oberfläche aus je einer Schale (22) mit einer darin befindlichen Kalotte.(23) bestehen, die aufwärts weist, daß
   die biegsamen Elemente jeweils aus einem biegsamen Rohr,
   (25) beispielsweise aus Gummi, bestehen, daß weiterhin
   Elemente zur Befestigung des biegsamen Rohres vorgesehen
   sind, derart,daß es nach unten weist und die Schale (22)
   umschließt, und daß jedes zweite Element mit kurvenförmiger Oberfläche, bestehend aus einer Kugel (24) mit
   einem kleineren Radius als die Kalotte (23) im Normalfall in der Kalotte (23) ruht.

5. Einrichtung gemäß Anspruch 1 oder 2, dadurch gekennzeichnet, daß die ersten kurvenförmigen Elemente jeweils aus zwei Schalen (36, 37) mit je einer Kalotte
   (4o, 41) bestehen, wobei eine Kalotte (41) nach unten
   und die andere Kalotte (42) nach oben weist, und die
   zweiten kurvenförmigen, aus je einer Kugel (38) mit
   einem Radius kleiner als der der Kalotten (4o, 41), bestehenden Elemente jeweils durch ein biegsames und die beiden Schalen (36, 37) umschließendes Rohr (39) zwischen den beiden Schalen (36, 37) in den Kalotten (4o, 41) gehalten werden.

6. Einrichtung gemäß Anspruch 1 oder 2, dadurch gekennzeichnet, daß die ersten Elemente mit kurvenförmiger Oberfläche aus einer nach oben weisenden Kalotte (33) bestehen, daß jeweils das zweite Element mit kurvenförmiger Oberfläche aus einer Kugel (24) besteht, die im Normalfall in der Kalotte (33) ruht, wobei die Kugel (24) einen kleineren Kurvenradius als die Kalotte (33) hat, und daß jeweils ein biegsames Rohr (25) die Kugel (24) in ihrer Lage hält, aber horizontale Bewegungen der Kugel (24) relativ zur Kalotte erlaubt.

7. Einrichtung gemäß Anspruch 1 oder 2, dadurch gekennzeichnet, daß die ersten Elemente mit kurvenförmiger Oberfläche jeweils aus einer nach oben weisenden Kalotte (51) bestehen, und die zweiten Elemente mit kurvenförmiger Oberfläche jeweils aus einer Kugel (5o) bestehen, die im Normalfall in der Kalotte (51) ruht, und daß jeweils eine im wesentlichen U-förmige Klammer (46) vorgesehen ist, die mit dem einen Bein (47) an der zweiten Plattform (44) (bzw. dem oberen horizontalen Element) befestigt ist und mit dem anderen Bein (48) unter die erste Plattform (42) (bzw. erste horizontale Element) ragt, und daß als biegsames Element ein biegsames Stück Kabel (52) an der Kugel unlösbar befestigt ist und einstellbar gegen das zweite Bein (48) der U-förmigen Klammer (46) stößt.

8. Einrichtung gemäß Anspruch 1 oder 2, dadurch gekennzeichnet, daß die ersten Elemente mit kurvenförmiger Oberfläche jeweils aus einer Kalotte (33) im besagten Stab (8) zur Kraftübertragung bestehen, welche aufwärts in Richtung der zweiten Plattform (29) weist, und daß die zweiten Elemente mit kurvenförmiger Oberfläche jeweils aus einer Kugel (24) bestehen, die im Normalfall in der Kalotte (33) ruht, und daß die biegsamen Elemente jeweils aus einem Stück biegsamen Rohrs (25) bestehen, das an der zweiten Plattform (29) befestigt ist und in elastischer Weise die Kugel (24) zum Zusammenwirken mit der Kalotte (33) hält.

9. Einrichtung gemäß Anspruch 1 oder 2, gekennzeichnet dadurch, daß sie Begrenzungselemente (14, 16) enthält, die wirksam an einer der beiden Plattformen (13) (bzw. horizontalen Elemente) befestigt sind und mit der anderen Plattform (1) (bzw. horizontalen Element) so zusammenwirken, daß eine horizontale Bewegung einer Plattform (bzw. horizontalen Element) relativ zur (zum) anderen begrenzt wird.

1o. Einrichtung gemäß Anspruch 1 oder 2, dadurch gekennzeichnet, daß zur Begrenzung der horizontalen Relativbewegung der Plattformen (bzw. horizontalen Elemente) einstellbare Schrauben (57) vorgesehen sind.

11. Einrichtung gemäß Anspruch 1 oder 2, dadurch gekennzeichnet, daß die ersten und zweiten Elemente mit kurvenförmiger Oberfläche einen unendlichen Kurvenradius haben, so daß sie im wesentlichen flach sind.

Fig. 1

Fig. 2

Fig. 1a

Fig. 3

0065176

Fig. 4

Fig. 5

Fig. 6

Fig. 7